# DEMANDE DE BREVET EUROPEEN

(11) **EP 0 921 673 A1**
(43) Date de publication de la demande: **09.06.1999**
(21) Numéro de dépôt: 98403012.2
(22) Date de dépôt: 02.12.1998
(51) Int. Cl.: H04M 3/54

(54) **Procédé d'acheminement d'appels provenant d'un réseau de transmission**

(30) Priorité: 03.12.1997 FR 9715207
(71) Demandeur: SAGEM SA, 75116 Paris (FR)
(72) Inventeur: Nicaise, Pierre, 60580 Coye la Forêt (FR); Kuhn, Alex, 95430 Auvers sur Oise (FR)
(74) Mandataire: Bloch, Gérard

(57) **Abrégé**

Dans le procédé d'acheminement d'appels entrants pour des équipements (1, 12, 13) agencés pour recevoir des signaux de natures respectivement différentes, et raccordés à une même ligne d'un réseau de communication (10), on associe, à au moins l'un des équipements (1, 12, 13), un numéro de renvoi et, en cas d'appel entrant, on analyse (4) la nature du signal de ligne et, s'il correspond à l'équipement (1; 12; 13) à numéro de renvoi, la communication est renvoyée (11) sur la ligne de renvoi.

## Description

Les centraux téléphoniques publics et privés permettent à un abonné de commander l'acheminement des appels qui lui sont destinés vers un numéro autre que son numéro d'annuaire, ceci par un renvoi temporaire. Quittant son bureau pour un autre, ou partant en vacances, il peut ainsi être joint dans l'autre bureau ou la résidence de vacances.

Cependant, dès qu'au moins deux terminaux de types différents sont raccordés à une même ligne, par exemple un téléphone avec éventuellement répondeur-enregistreur et un télécopieur, une telle exploitation peut se révéler non satisfaisante.

En effet, l'abonné peut souhaiter conserver telle quelle l'exploitation du répondeur-enregistreur, qu'il pourra consulter à distance, mais par contre renvoyer vers un autre télécopieur les télécopies qui lui sont adressées. Ou il peut encore souhaiter ne renvoyer que les appels purement téléphoniques, sur une ligne de renvoi ne comportant qu'un poste téléphonique, les télécopies étant éventuellement renvoyées vers un secrétariat.

Bref, l'unicité de la ligne, ou du numéro d'appel, implique a priori un seul et même acheminement des appels destinés aux appareils qui y sont raccordés.

La présente invention vise à s'affranchir de cette contrainte.

A cet effet, l'invention concerne un procédé d'acheminement d'appels entrants pour des équipements agencés pour recevoir des signaux de natures respectivement différentes, et raccordés à une même ligne d'un réseau de communication, caractérisé par le fait qu'on associe, à au moins l'un des équipements, un numéro de renvoi et, en cas d'appel entrant, on analyse la nature du signal de ligne et, s'il correspond à l'équipement à numéro de renvoi, la communication est renvoyée sur la ligne de renvoi.

Ainsi, c'est en définitive le type de l'appareil appelé qui commande un renvoi sélectif.

Cette façon de procéder est inhabituelle pour un réseau de communication. En effet, un réseau comme le réseau téléphonique commuté RTC établit simplement un chemin entre deux terminaux d'abonnés, et ensuite il est transparent, c'est-à-dire insensible, aux signaux transmis sur ce chemin, et ne détecte que le raccrochage de l'un des terminaux.

Dans une mise en oeuvre particulière du procédé de l'invention, on prend la communication à renvoyer, on l'enregistre et, après un appel sortant, on la retransmet sur la ligne de renvoi.

On peut également, en cas de correspondance du signal en ligne et de l'équipement à numéro de renvoi, commander par l'un desdits équipements une transmission directe de la communication à renvoyer sur la ligne de renvoi.

L'appel entrant peut être rebouclé au niveau des équipements, sur une autre ligne, réservée par exemple aux appels sortants, ou bien il peut être prévu de commander le central téléphonique pour y dérouter l'appel vers son destinataire final et alors libérer la ligne des équipements.

Dans le cas de la transmission directe de la communication à renvoyer, on peut la commander depuis un équipement autre que l'équipement à numéro de renvoi.

L'invention sera mieux comprise à l'aide de la description suivante d'un mode de mise en oeuvre préféré du procédé de l'invention, en référence au dessin annexé, sur lequel :
- la figure 1 représente schématiquement un télécopieur, un poste téléphonique et un répondeur-enregistreur reliés à une même ligne téléphonique, mettant en oeuvre le procédé de l'invention, et
- la figure 2 représente schématiquement un central téléphonique permettant un renvoi.

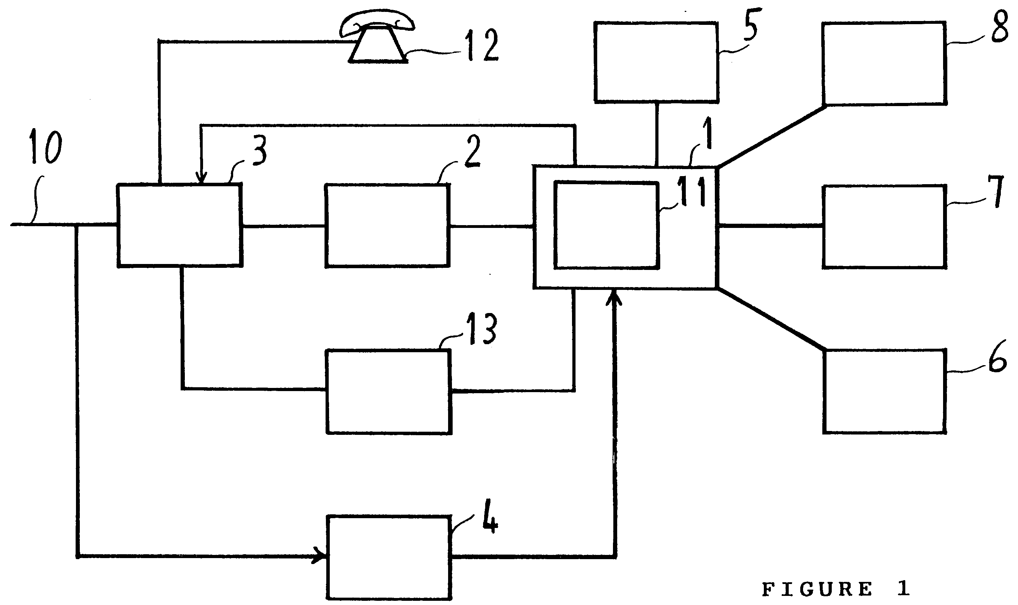

Le télécopieur représenté sur la figure 1 comporte une unité centrale 1, ici un microprocesseur, reliée par un modem 2 à un circuit 3, qu'il commande, d'aiguillage d'une ligne 10 du réseau téléphonique commuté. Au circuit d'aiguillage 3 sont en outre raccordés dans cet exemple un poste téléphonique 12 et un répondeur-enregistreur 13.

Dans cet exemple, le répondeur-enregistreur 13 est fonctionnellement intégré au télécopieur, c'est-à-dire que le microprocesseur 1 assure cette fonction en temps partagé, en utilisant une mémoire 5 contenant des annonces vocales et servant à enregistrer des messages vocaux reçus ainsi que des télécopies.

Un circuit 4 de surveillance de la ligne 10, analysant les signaux qu'elle transmet, est relié en entrée à celle-ci sous haute impédance et fournit ses résultats au microprocesseur 1. Celui-ci comporte un circuit 11 de gestion de renvois d'appels.

Un clavier 6 permet de saisir des numéros de renvoi associés respectivement au télécopieur en tant que tel (1), au répondeur-enregistreur 13 et au poste téléphonique 12. Ces numéros de renvoi fournis au microprocesseur 1 sont mémorisés en mémoire vive sauvegardée 8 et affichés pour contrôle sur un afficheur 7.

L'exploitation de ces trois terminaux est la suivante.

L'utilisateur de ceux-ci peut programmer le renvoi des appels réseau, destinés à l'un ou plusieurs des terminaux 1, 12, 13, vers un ou plusieurs numéros de renvoi respectifs.

En cas d'appel entrant, auquel il est répondu par bouclage de ligne dans le circuit 3, le circuit 4 tente de déterminer le terminal destinataire, par analyse de la nature du signal en ligne. Dans cet exemple, la détection d'une porteuse de fréquence fixe prédéterminée, pendant une durée dépassant un seuil, traduit un appel de télécopieur. On peut d'ailleurs détecter soit la porteuse reçue soit une porteuse que le télécopieur appelé émet en réponse, par exemple du 1100 Hz et du 2100 Hz. Une fréquence de 1300 Hz peut par contre être caractéristique d'un appareil de vidéotext. Le modem 2, limité aux porteuses spécifiques aux télécopieurs, a dans ce cas la même fonction que le circuit 4. Ce dernier peut en outre, inversement, détecter de l'énergie dans des bandes de fréquences non allouées à des porteuses, et en déduire, en l'absence de signaux de télécopieur, qu'il s'agit d'un signal vocal. Après temporisation éventuelle pour permettre un décrochage du poste 12, le répondeur-enregistreur 13 est activé et un message vocal, correspondant à l'appel, est temporairement enregistré dans la mémoire 5.

Si, au contraire, le circuit 4 ou modem 2 reconnaît en ligne 10 des signaux caractéristiques d'un télécopieur, le protocole télécopie est activé et la télécopie correspondant à l'appel est de même mémorisée temporairement dans la mémoire 5.

Une fois la communication terminée, le microprocesseur 1 lance un appel sortant sur la ligne 10 pour en retransmettre les données (voix; télécopie) mémorisées vers la ligne d'abonné de renvoi spécifique au terminal appelé, c'est-à-dire le télécopieur 1, le poste 12 ou le répondeur-enregistreur 13. C'est donc le circuit 4 qui permet de déterminer le terminal appelé d'après la nature du signal de ligne et donc de sélectionner le numéro de renvoi associé à celui-ci dans la mémoire 8, si tel est le cas. Ainsi, comme évoqué plus haut, ce sont les signaux liés à l'application, telle que télécopie, qui commandent le réseau 10 pour renvoyer un appel.

Le circuit 11 de renvoi commande à cet effet un circuit de bouclage de ligne du circuit 3, puis commande le modem 2 pour émettre une numérotation DTMF d'appel du numéro de renvoi approprié. Une numérotation par découpage du courant de ligne par le circuit de prise de ligne serait aussi envisageable.

Le terminal raccordé à la ligne de renvoi ayant répondu, le message mémorisé approprié, vocal ou télécopie, lui est transmis de façon classique. Une étiquette vocale peut être ajoutée à un message vocal pour indiquer qu'il s'agit d'un renvoi, en précisant le numéro appelé initialement (ligne 10). De même, un historique de l'acheminement peut être mémorisé dans la mémoire 8, pour indiquer le succès ou l'échec du renvoi et, en pareil cas, réitérer le renvoi.

Dans le cas où l'abonné dispose, sous un même numéro d'appel, d'au moins deux liaisons banalisées pour une pluralité de terminaux, par exemple des liaisons 2 B + D à 2 canaux à 64 kb/s chacun, ou de deux liaisons respectivement utilisables uniquement en entrée ou sortie, il peut alors renvoyer l'appel entrant directement vers le numéro de renvoi, par rebouclage d'une liaison sur l'autre, sans devoir mémoriser le message. Le réseau téléphonique commuté (10) offre en effet des temps de réponse suffisamment courts pour que le protocole de transmission du message depuis le terminal qui l'engendre ne soit pas perturbé par le délai supplémentaire nécessaire pour effectuer le reroutage de renvoi, c'est-à-dire que le renvoi est en temps réel.

Le renvoi, ultérieur ou direct, de la communication à renvoyer peut être effectué par l'équipement appelé, ici le télécopieur proprement dit 1, ou par un équipement (1) autre que l'équipement appelé (12; 13).

On peut encore, au lieu de renvoyer l'appel au niveau de l'abonné, en lançant en fait un autre appel, commander directement le central téléphonique de rattachement de la ligne 10, par le canal D de signalisation, pour dérouter l'appel dans le central et le renvoyer vers la ligne de renvoi tout en restant dans le réseau, donc en libérant la ligne 10.

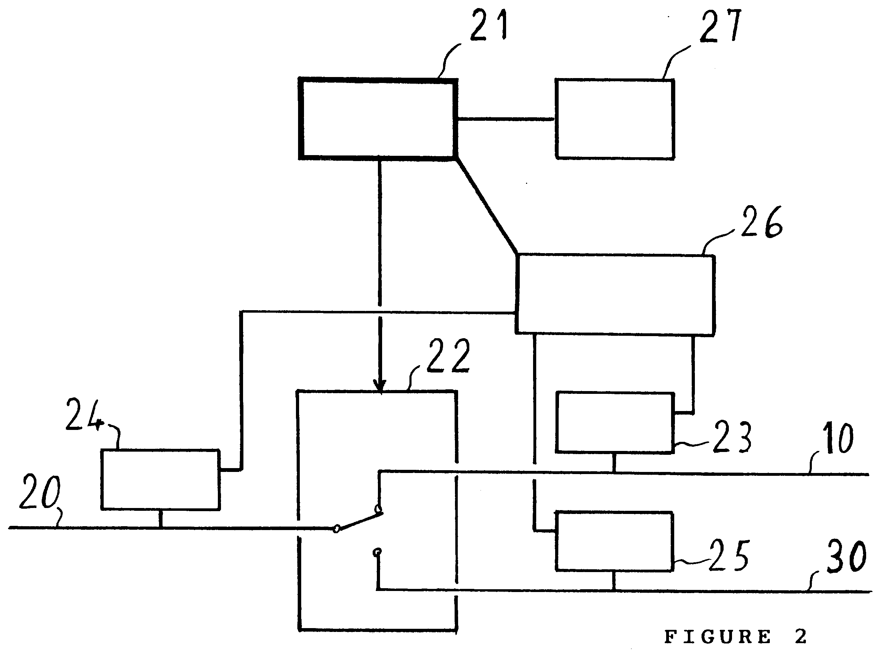

La figure 2 représente schématiquement le central téléphonique.

Il comporte une unité centrale 21 gérant une matrice temporelle de connexion 22 à partir des informations saisies sur des lignes, ici numériques, comme 10, 20 et 30. A chacune de celles-ci est associé un circuit logique respectif 23, 24 et 25 à registre tampon, extrayant le canal de signalisation D pour le relier à un microprocesseur 26 frontal de l'unité centrale 21. Celle-ci est associée à une mémoire 27 de table de renvois temporaires pour les diverses lignes comme 10, 20 et 30, table uniquement valable pour l'appel en cours pour chaque ligne, puisque c'est le circuit 4 qui détermine le numéro de renvoi approprié par analyse des signaux de ligne, alors que les centraux du réseau téléphonique sont transparents au signaux transmis, hormis éventuellement les signaux DTMF. Ainsi, à partir du circuit 4 analysant les signalisations de ligne liées à une application considérée (couches OSI 4 à 7) (Interconnexion des Systèmes Ouverts), comme ici la télécopie, on commande le réseau, à travers le microprocesseur 1, sans se limiter, selon la façon classique, aux couches OSI 1 à 3, qui interprètent seulement la numérotation et établissent un circuit de liaison, transparent aux signalisations des couches OSI supérieures, 4 à 7, liées à une application déterminée. Dans le procédé de l'invention, au contraire, ces signalisations, associées aux couches OSI supérieures et caractéristiques d'un type de terminal, vont en définitive commander le réseau pour effectuer le renvoi. De ce fait, le réseau se trouve maintenant fonctionnellement intégré à l'application et a donc un comportement différent selon les diverses applications respectivement associées aux terminaux reliés à la même ligne.

On commande donc ici la transmission directe de l'appel vers la ligne de renvoi en envoyant au réseau des signalisations relatives aux couches OSI de niveau au moins égal au niveau quatre de l'application associée à l'équipement appelé. La table de renvoi 26 est alimentée par les circuits 23, 24, 25 lisant les signalisations des canaux D des diverses lignes comme 10, 20 et 30. Cette table 26 contribue à la commande de la matrice de connexion 22 du central, en modifiant le numéro appelé, fourni à travers le circuit 24 par le terminal (ligne 20) à l'origine de l'appel vers la ligne 10. L'appel est ainsi renvoyé sur la ligne 30, comme le schématise très sommairement le commutateur dessiné dans le réseau de connexion 22.

## Revendications

1. Procédé d'acheminement d'appels entrants pour des équipements (1, 12, 13) agencés pour recevoir des signaux de natures respectivement différentes, et raccordés à une même ligne d'un réseau de communication (10), caractérisé par le fait qu'on associe, à au moins l'un des équipements (1, 12, 13), un numéro de renvoi et, en cas d'appel entrant, on analyse (4) la nature du signal de ligne et, s'il correspond à l'équipement (1; 12; 13) à numéro de renvoi, la communication est renvoyée (11) sur la ligne de renvoi (30).

2. Procédé selon la revendication 1, dans lequel on prend la communication à renvoyer, on l'enregistre (5) et, après un appel sortant, on la retransmet sur la ligne de renvoi (30).

3. Procédé selon l'une des revendications 1 et 2, dans lequel, en cas de correspondance du signal en ligne et de l'équipement à numéro de renvoi, on commande, par l'un desdits équipements (1, 12, 13), une transmission directe de la communication à renvoyer sur la ligne de renvoi (30).

4. Procédé selon la revendication 3, dans lequel on commande la transmission directe depuis un équipement autre que l'équipement à numéro de renvoi.

5. Procédé selon l'une des revendications 3 et 4, dans lequel on commande la transmission directe de l'appel par envoi au réseau (10) de signalisations relatives aux couches OSI de niveau au moins égal au niveau quatre d'une application associée à l'équipement (1, 12, 13) appelé.

6. Procédé selon l'une des revendications 1 à 5, dans lequel, lesdits équipements comprenant un télécopieur (1) et un répondeur-enregistreur (13), en cas d'appel entrant on déduit, en l'absence de signaux de télécopieur, qu'il s'agit d'un appel vers le répondeur-enregistreur (13), pour le renvoyer.

7. Procédé selon l'une des revendications 1 à 6, dans lequel on mémorise tout échec du renvoi et on réitère celui-ci.
